# EUROPEAN PATENT SPECIFICATION

(11) **EP 2 566 290 B1**
(45) Date of publication and mention of the grant of the patent: **04.03.2020**
(21) Application number: 11179560.5
(22) Date of filing: 31.08.2011
(51) Int. Cl.: H04W 88/06, H04L 29/06, H04W 84/10, H04W 84/12, H04W 12/02, H04W 48/18

(54) **DELIVERING INFORMATION NEEDED FOR A SECURE NETWORK CONNECTION**
LIEFERUNG VON INFORMATIONEN, DIE FÜR EINE SICHERE NETZWERKVERBINDUNG NOTWENDIG SIND
FOURNITURE D'INFORMATIONS NÉCESSAIRES POUR UNE CONNEXION DE RÉSEAU SÉCURISÉ

(43) Date of publication of application: 06.03.2013
(73) Proprietor: Airbus Defence and Space Oy, 00380 Helsinki (FI)
(72) Inventor: Eskelinen, Antti, 00380 Helsinki (FI); Pesonen, Juha-Pekka, 00380 Helsinki (FI); Kataikko, Mika, 00380 Helsinki (FI)
(74) Representative: Kolster Oy Ab

(56) References cited:
- EP-A1- 1 492 364
- EP-A1- 2 154 608
- GB-A- 2 423 888
- US-A1- 2008 247 346

## Description

### FIELD

The present invention relates to delivering information needed for a secure wireless network connection.

### BACKGROUND ART

The following description of background art may include insights, discoveries, understandings or disclosures, or associations together with disclosures not known to the relevant prior art to the present invention but provided by the invention. Some such contributions of the invention may be specifically pointed out below, whereas other such contributions of the invention will be apparent from their context.

A Professional Mobile Radio (PMR) network is a mobile communication network for a special group of users, for example, for one or more enterprises or institutions. Typical examples of PMR networks are public safety type PMR networks used by public officials such as police, fire brigade and medical personnel. Consequently PMR networks are often used in emergency scenarios that may influence people's health or even life. One example technology that is used in PMR networks is Terrestrial Trunked Radio Access (TETRA). The user apparatuses in TETRA may be divided into handheld radio apparatuses and mobile radio apparatuses in a vehicle and fixed radio apparatuses, each for providing secure voice and/or data communications. However, since the voice communication is more critical, the vehicles, such as police cars or police motorcycles, comprise radio apparatuses configured to access, in addition to TETRA, to wireless local area networks (WLAN). The WLAN is typically used in garage environments for updating local databases in the vehicle or for transferring data, such as reports and photographs, between the vehicle and the administrating system. However, in field conditions, TETRA is used in data transfer between the vehicle and hand portable radio apparatuses, although using WLAN for that would release TETRA resources for the more critical voice traffic. The reason for not using WLAN in such cases is that in field conditions, if an "open to all" WLAN provided by a mobile access point, like the radio apparatus in the vehicle, is used, the security of the information is in risks, and also non-authorized users can connect to the access point. An "open to all" WLAN is a WLAN in which a service set identifier (SSID), or any corresponding password, is not required or, if required, SSID is broadcasted by the mobile access point so that everyone can obtain it. If a secure WLAN (i.e. a WLAN not open to all) is used it requires that information enabling connection to the access point is obtained by some mechanism in advance, and inputted by the person using the hand portable radio apparatus. For example, SSID for a WLAN may be delivered to assumed users beforehand by sending emails or text messages, or written on a flip-over pad or a board or given orally on a meeting at the start of a shift, etc. Then, in the field, each person wanting to use the WLAN must trigger a search for WLANs, select the proper one and then find the beforehand submitted SSID and input SSID manually. This is rather complicated for the users, and predicting assumed users is rather difficult.

GB 2 423 888 teaches a solution how to transmit TETRA over WLAN. In the solution, the service is requested by sending, from a user terminal to a WLAN network node, in a WLAN message requesting an association to the WLAN an SSID that is a service identifier in WLAN for the specific service. WLAN accepts the association and establishes a tunnel to an interworking function, which is connected to TETRA SwMI. After that there is a connection over which packets sent by the user terminal in WLAN are tunneled to the interworking function, which then forwards the packets to TETRA SwMI.

EP 1492 364 discloses how a WLAN interface in a user terminal may be activated using an already activated GPRS interface. EP 1 492 364 teaches that the user initiates an online registration procedure and transmits information concerning the future WLAN interface to be activated and information assigned to the user terminal to a registration server. According to EP 1 492 364, the information may be transmitted from the user terminal over the GPRS, or from a laptop. The registration server uses, in the solution of EP 1 492 364, the information to create activation parameters for the WLAN interface, and sends the activation parameters over a GPRS network and the GPRS interface to the user terminal. The user terminal stores the activation parameters, the WLAN interface is activated and data can be sent also over a WLAN network. EP 1492 364 teaches that from now on, the user of the user terminal can choose between the GPRS network and WLAN network for data transmission when a need to send data arises.

US 2008/247346 teaches a solution in which, for a PDP context between a user terminal and a gateway node, a GTP tunnel is established without a traffic flow template TFT, and when the TFT-less PDP context is used for user data packets, a local TFT is created and stored in the gateway node. US 2008/247346 teaches that this local TFT may be applied when the user terminal requests from the gateway a further PDP context via a different radio access domain.SUMMARY

An object of the present invention is thus to provide a method and an apparatus for implementing the method so as to facilitate establishment of a secure wireless local area network connection between radio apparatuses. The object of the invention is achieved by methods, an apparatus, a computer program product and a system which are characterized by what is stated in the independent claims. The preferred embodiments of the invention are disclosed in the dependent claims.

An aspect of the invention provides delivering information needed for a secure wireless connection to an access point using a secure channel of another network between apparatuses, when the apparatuses are configured to support at least the access technology used by the access point and the access technology in the other network. Hence, an easy to use secure mechanism for delivering the information needed, for example in field conditions, is obtained.

### BRIEF DESCRIPTION OF THE DRAWINGS

In the following, exemplary embodiments will be described in greater detail with reference to accompanying drawings, in which
Figure 1 shows simplified architecture of a system and block diagrams of apparatuses according to an embodiment;
Figures 2 and 3 are flow charts illustrating different functionalities; and
Figure 4 is a signalling chart according to an embodiment.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to any wireless apparatus, access point node, controlling node and/or corresponding component that support use of at least one wireless access technology in a communication system. The communication system may be a wireless communication system or a communication system utilizing both fixed networks and wireless networks. The protocols used, the specifications of communication systems, access point nodes, controlling nodes and wireless apparatuses develop rapidly. Such development may require extra changes to an embodiment. Therefore, all words and expressions should be interpreted broadly and they are intended to illustrate, not to restrict, the embodiment.

In the following, different embodiments will be described using, as an example of a system architecture whereto the embodiments may be applied, an architecture based on TETRA providing a first secure air interface channel and IEEE 802.11 WLAN radio access technologies, like WiFi, providing a second secure connection over another type of air interface, without restricting the embodiments to such a solution. Other examples of systems that may provide the first secure wireless channel include TETRAPOL, DMR (digital mobile radio) systems, Project 25 (P25) mobile radio systems, 3G (third generation) mobile communications systems, 4G (fourth generation) mobile communications systems, Mobile Broadband Wireless Access (MBWA), Wi-Max, iBurst, Flash-OFDMA, IPW. Other examples of system that can provide the second secure wireless connection include wireless personal area networks (WPAN), such as those based on IrDA, Bluetooth, ultra-wideband (UWB), Z-Wave and ZigBee, a multimedia access communication (MMAC) and a mobile network, such as a mobile ad hoc network (MANET). Basic difference in the above examples between the first system and the second system is that to access the first system one has to have a subscription, whereas to access the second system no subscription is needed. Typically access in the first system utilizes pre-shared and pre-stored authentication information, assigned during subscription, stored to a user apparatus or a card insertable to a user apparatus, the authentication information not being revealed to the subscriber, at least part of the authentication information of each subscription being unique for the subscription. Contrary to that, access in the second system typically uses authentication information that is common to all, and revealed to a user. However, it should be appreciated that a network based on the above examples of the second systems may be used to provide the first secure channel over which access information, not usable to access the network providing the first secure channel, to a further network is transmitted. The "not usable to access" means herein information with which an access attempt to the first network will fail, the information being not derivable from the access information of the first network.

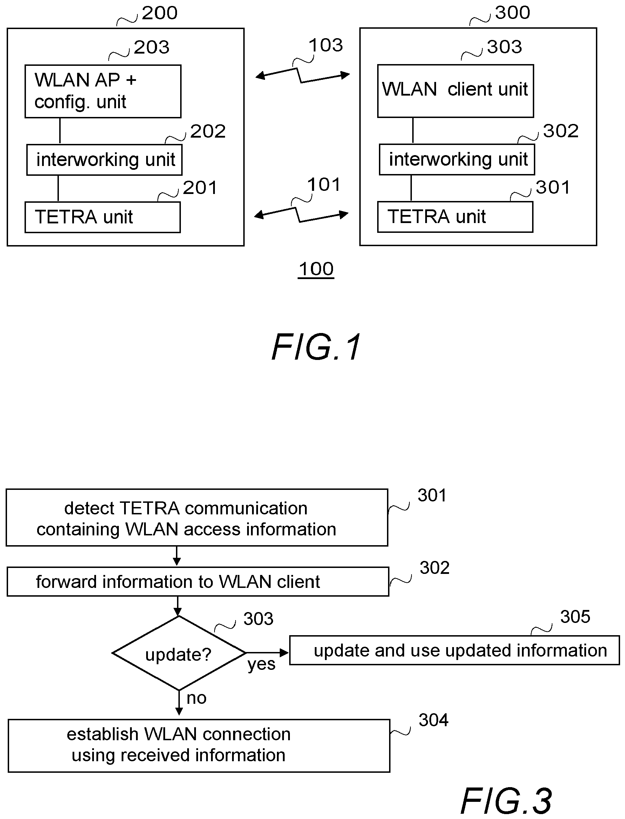

A general architecture of a communication system according to an embodiment based on TETRA and WLAN is illustrated in Figure 1. Figure 1 is a simplified system architecture only showing two apparatuses and some functional entities, all being logical units whose implementation may differ from what is shown. The connections shown in Figure 1 are logical connections; the actual physical connections may be different. It is apparent to a person skilled in the art that the systems also comprise other functions and structures used in or for communication in TETRA and WLAN. They, as well as the protocols used, are well known by persons skilled in the art and are irrelevant to the actual invention. Therefore, they need not to be discussed in more detail here.

In the embodiment illustrated in Figure 1, the system 100 comprises two mobile radio apparatuses 200, 300 both supporting a TETRA air interface 101 and a wireless local area network air interface 103 and each of them may be addressed with one subscriber identity, which may be an individual subscriber identity or a group subscriber identity. It should be appreciated that in the TETRA solution one or both of the radio apparatuses may be a fixed radio apparatus.

The mobile radio apparatuses 200, 300, or corresponding apparatuses providing wireless access, are computing devices comprising not only prior art means, but also means for implementing an access point node functionality and/or a client functionality described below with an embodiment. A radio apparatus, or a corresponding apparatus that provides at least wireless access, may comprise separate means for each separate function, or means may be configured to perform two or more functions, and even to combine functions of different embodiments. These means may be implemented by various techniques. For example, the means may be implemented in hardware (one or more apparatuses), firmware (one or more apparatuses), software (one or more modules), or combinations thereof. For a firmware or software, implementation can be through units/modules (e.g., procedures, functions, and so on) that perform the functions described herein. In other words, the radio apparatus, or a corresponding apparatus providing wireless access, is configured to perform one or more of access point and/or client functionalities described below with an embodiment, and it may be configured to perform functionalities from different embodiments.

In the illustrated example, one of the radio apparatuses is configured to provide an access point functionality to the wireless local area network. For this purpose, the exemplary radio apparatus 200 illustrated in Figure 1 comprises a wireless local area network access point and configuration unit (WLAN AP + config. unit) 203, and the radio apparatus 200 is called below a mobile access point for the sake of clarity. The other radio apparatus 300 is configured to provide a client functionality in the wireless local area network. For this purpose, the exemplary radio apparatus 300 illustrated in Figure 1 comprises a wireless local area network client unit (WLAN client unit) 304, and the radio apparatus 300 is called below a hand portable apparatus 300 for the sake of clarity.

Further, both apparatuses 200, 300 comprise a TETRA unit 201, 301 for providing the first secure channel and transmitting/receiving information needed for secure WLAN connection as will be described in more detail below, and an interworking unit 202, 302 for providing interworking between TETRA and WLAN. The first secure channel may be established either in direct mode between the radio apparatuses, or it may be a connection over a switching and management infrastructure.

In addition, the radio apparatuses 200, 300 comprise different interface units, such as two or more receiving units (not illustrated in Figure 1) for receiving different inputs, control information, requests and responses, for example, over the two different access networks (TETRA and WLAN in this example), and two or more sending units (not illustrated in Figure 1) for sending different outputs, control information, responses and requests, for example, over the two different access networks (TETRA and WLAN in this example). The receiving unit and the transmitting unit each provide an interface in the radio apparatus, or in a corresponding apparatus providing wireless access, the interface including a transmitter and/or a receiver or a corresponding means for receiving and/or transmitting information, and performing necessary functions so that content, control information, etc. can be received and/or transmitted. The receiving and sending units may comprise a set of antennas, the number of which is not limited to any particular number.

It should be appreciated that the wireless local area network access point and configuration unit 203 represents herein an access point and configuration unit for any type of network providing the second secure channel, the wireless local area network client unit 303 represents herein an example of a corresponding client unit, and the TETRA unit 201, 301 represents herein an example of a unit for a network providing the first secure channel.

Further, the radio apparatuses, or corresponding apparatuses providing wireless access, may comprise memory (not illustrated in Figure 1), and/or units for providing access to other networks, like Internet. The radio apparatuses may comprise any type of subscriber identification unit or element that associates the actual terminal equipment of the wireless apparatus to its present user for different authentication purposes.

Each of the units in the mobile access point node and/or in the hand portable apparatus may be a separate unit or integrated to another unit, or the units may be integrated together. Further, a radio apparatus, or a corresponding apparatus providing wireless access, may comprise all units described above (including the access point and configuration unit and the corresponding client unit). It should be appreciated that the mobile access point node and the hand portable apparatus may comprise other units used in or for a communication over one of the access networks or for coexisting communications, one of the over one of the access networks, another over the other access network. However, they are irrelevant to the actual invention and, therefore, they need not to be discussed in more detail here.

The radio apparatus, or a corresponding apparatus providing wireless access, implementing functionality or some functionalities according to an embodiment may generally include a processor (not shown in Figure 1), controller, control unit, micro-controller, or the like connected to a memory and to various interfaces of the apparatus. Generally the processor is a central processing unit, but the processor may be an additional operation processor. The interworking unit 202, 302 and/or the TETRA unit 201, 301, and/or the wireless local area network access point and configuration unit 203, and/or the wireless local area client unit 304, or corresponding units when another system is used, may be configured as a computer or a processor, or a microprocessor, such as a single-chip computer element, or as a chipset, including at least a memory for providing storage area used for arithmetic operation and an operation processor for executing the arithmetic operation. The interworking unit 202, 302 and/or the TETRA unit 201, 301, and/or the wireless local area network access point and configuration unit 203, and/or the wireless local area client unit 304, or corresponding units when another system is used, may comprise one or more computer processors, application-specific integrated circuits (ASIC), digital signal processors (DSP), digital signal processing devices (DSPD), programmable logic devices (PLD), field-programmable gate arrays (FPGA), and/or other hardware components that have been programmed in such a way to carry out one or more functions of one or more embodiments. An embodiment provides a computer program embodied on any client-readable distribution/data storage medium or memory unit(s) or article(s) of manufacture, comprising program instructions executable by one or more processors/computers, which instructions, when loaded into an apparatus, constitute the interworking unit 202, 302 and/or the TETRA unit 201, 301, and/or the wireless local area network access point and configuration unit 203, and/or the wireless local area client unit 304, or corresponding units when another system is used. Programs, also called program products, including software routines, program snippets constituting "program libraries", applets and macros, can be stored in any medium, and may be downloaded into an apparatus. The data storage medium or the memory unit may be implemented within the processor/computer or external to the processor/computer, in which case it can be communicatively coupled to the processor/computer via various means as is known in the art.

The memory may be, for example, volatile and/or non-volatile memory, for example EEPROM, ROM, PROM, RAM, DRAM, SRAM, firmware, programmable logic, double floating-gate field effect transistor, etc. and typically store content, data, or the like, and the memory may store the information needed for the wireless local area network connection as well as other information. Further, the memory may store computer program code such as software applications (for example, for the interworking unit 202, 302 and/or the TETRA unit 201, 301, and/or the wireless local area network access point and configuration unit 203, and/or the wireless local area client unit 304, or corresponding units when another system is used) or operating systems, information, data, content, or the like for the processor to perform steps associated with operation of the mobile access point node and/or the hand portable apparatus in accordance with embodiments. The memory may be random access memory, a hard drive, other fixed data memory or storage device or any combination thereof. Further, the memory, or part of it, may be removable memory detachably connected to the access point node and/or the user equipment.

Although the mobile access point node and the hand portable apparatus have been depicted as one unity, different processors, controllers, interfaces and/or memory may be implemented in one or more physical or logical units.

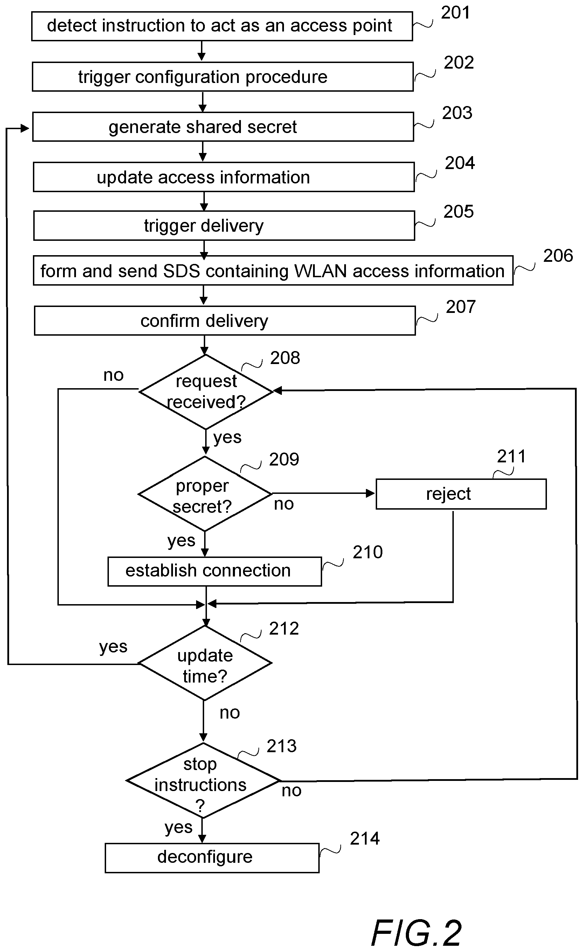

Figure 2 is a flow chart illustrating exemplary functionality of a mobile access point. In the example, it is assumed that the mobile access point is attached to a TETRA network, when the TETRA unit in the mobile access point detects, in step 201, an instruction to act as a WLAN access point. The TETRA unit may receive the instruction from a dispatcher, or a controller or via user interface, and it may be given as an instruction to configure WLAN access point, or as an instruction to transmit WLAN access information to one or more hand portable apparatuses. The instructions may contain address information on hand portable apparatuses or a group identifier of a group (a group may be any kind of a group, from an ad hoc group to a predefined group) or an indication to deliver WLAN access information over the current existing TETRA connections.

The instructions may further contain information indicating how long the mobile access point should act as an access point.

In response to detecting the instruction, the TETRA unit triggers, in step 202, the WLAN access point and configuration unit to configure the access point. The triggering is performed by transferring the instructions from the TETRA unit to the WLAN access point and configuration unit via the interworking unit. In response to triggering, the WLAN access point and configuration unit performs the configuration of the WLAN access point in step 203. In the illustrated example the configuration comprises generating only a shared secret to be used as a password/authentication information and an encryption key; a service set identifier (SSID) identifying the access point is preconfigured in the illustrated example implementation. In other implementations, a service set identifier may be generated each time an access point is configured and/or a shared secret regenerated. It should be appreciated that any parameter needed for access may be generated at this point, and/or the information or some of it may be associated with validity time and/or the validity time may be parameter-specific. If a validity time is associated, it depends on the implementation whether it is transmitted to the WLAN client or not.

Then the WLAN configuration information maintained in a memory for WLAN connections is updated, in step 204, to comprise the shared secret, and the delivery of access information, i.e. the shared secret and the service set identifier in the example, is triggered, in step 205, by transferring the access information via the interworking unit to the TETRA unit. Now the WLAN access point is in principle ready to establish connections using WLAN.

However, no valid connection establishment request over the WLAN can be received in the embodiment before the TETRA unit forms, in step 206, a configuration message containing the access information, and sends, in step 206, the configuration message to one or more hand portable apparatus that are attached to the TETRA network and thereby capable of receiving the configuration message. The hand portable apparatuses may belong to the same group as the apparatus acting as the WLAN access point and having an active TETRA call going on. However, there are no limitations how the hand portable apparatuses are selected, as long as they are attached to the TETRA network at the time the configuration message is sent to the apparatus. The configuration message may be a TETRA short data service message comprising the SSID and the shared secret for security-enabled WLAN access, or SSID for unsecured WLAN requiring a password to access the network. In the illustrated embodiment, the TETRA unit confirms, in step 207, the delivery of the access information to the WLAN access point and configuration unit via the interworking unit.

Then the WLAN access point and configuration unit monitors, whether a connection establishment request is received (step 208), and if yes, whether it contained a proper shared secret (step 209). If the connection establishment request contained a proper shared secret, it is received from an authorized user, since the shared secret is only delivered to them via the secure TETRA network providing only authorized access. Therefore the connection is established in step 210. If the shared secret in the connection establishment request was not a proper one (step 209), the request is rejected, in step 211. After establishing the connection or rejecting the request, the process continues in step 212 by monitoring whether it is time to perform a shared secret update. In other words, in this example, the WLAN access point and configuration unit is configured to update the shared secret periodically by generating a new shared secret (step 203) which is taken into use after the delivery is confirmed (step 207).

While the WLAN access point and configuration unit monitors requests and update time, it is also monitored, whether an instruction to stop acting as a mobile access point is received (step 213). It may be received directly by the WLAN access point and configuration unit or via the TETRA unit. The apparatus may be configured to act as the mobile access point as long as the apparatus is not moving, for a certain period of time, or the stop instruction may be given by a user, for example. It should be appreciated that other possibilities also exists. If a stop instruction is received (step 213), the WLAN access point and configuration unit in this example is configured to deconfigure, in step 214, the access point by deleting the shared secret(s) from the memory, and by closing down the existing WLAN connections.

In another embodiment, a received connection establishment request is accepted without any further checking, since the SSID, if generated each time the access point is created (configured) is known only by radio apparatus knowing also the shared secret.

Since the access information is sent to authorized and targeted users using their address information, there is no need to advertise the access point to others, i.e. the access point (and the thus formed WLAN network) may be non-visible to non-authorized users. This strengthens its security. However, it should be appreciated that the access point may be made visible to radio apparatus within its coverage area.

Figure 3 is a flow chart illustrating exemplary functionality of a hand portable apparatus according to an embodiment. In the example, it is assumed that the mobile access point is attached to a TETRA network, when the TETRA unit in the hand portable apparatus detects, in step 301, TETRA communication received over a TETRA channel and being a configuration message, i.e. containing WLAN access information. The TETRA communication may be an SDS message containing the WLAN access information, like SSID and required key(s), and/or other parameters, if any. The SDS message may contain in its header a bit indicating that this message is a configuration message so that the TETRA unit can recognize it. Other means to indicate that SDS message contains access information to WLAN may be used as well.

Since the information was received over a secure TETRA channel, the sender is an authorized sender with which the apparatus is allowed to established connections, and the TETRA unit forwards, in step 302, via the interworking unit, the received WLAN access information to the WLAN client. In the illustrated example, the WLAN client then checks, in step 303, whether or not the information relates to an existing WLAN connection, i.e. whether or not it is an update of the required key(s). If it is not an update, the WLAN client establishes, in step 304, a WLAN connection to the mobile access point wherefrom the TETRA message was received, using the received access information. If it was an update (step 303), the WLAN client updates, in step 305, the access information with the received access information, and uses thereafter the updated access information.

Since in the embodiment, no user interaction is needed to input the the access information, for example, the user need not to key a password, human errors are avoided.

In another embodiment, the WLAN client is configured, before establishing the WLAN connection in step 304, to ask the user, via the user interface, permission to trigger a WLAN connection establishment, and to trigger the establishment only in response to the user confirming that the WLAN connection may be established.

By receiving the access information this way, the shared secret shows to the WLAN client as a pre-shared secret, thereby enabling the use of any kind of security mechanism implemented in WLAN environments.

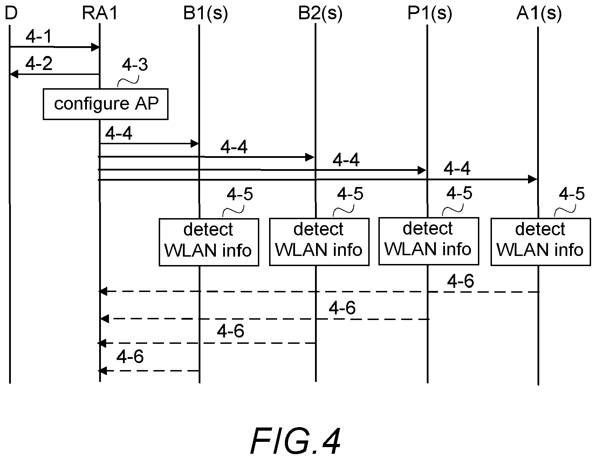

Figure 4 is a signalling chart illustrating signalling in an exemplary situation according to an embodiment, in which a TETRAPOL network is used as an example of a network providing the first secure channel. In Figure 4, information exchange using TETRAPOL is denoted by solid arrowhead lines and information exchange using WLAN is denoted by dashed arrowhead lines.

In the exemplary situation there has happened some kind of a severe accident in a factory, and there are firemen from a fire brigade one of city X and a fire brigade two of city Z, policemen and medical personnel near the place where the accident happened. An alarm control centre, or more precisely a dispatcher in the alarm control centre, is aware of TETRAPOL radios in the area, and notices that a head of the fire brigade one has in his vehicle, connected to the TETRAPOL radio, data relating to the factory and people working in the factory. Therefore the dispatcher D transmit, using in the illustrated example TETRAPOL short data service messages 4-1, to the radio apparatus RA1 in the head's vehicle, the message containing instructions to configure RA1 to act as an access point. In the illustrated example, messages 4-1 further comprise TETRAPOL address information on TETRAPOL radios of firemen of both brigades B1, B2, policemen P1 and medical personnel A1. TETRAPOL address information may be a group identifier, a list of individual addresses, a list of group identifiers, or a list comprising both group identifier(s) and individual address(es).

In the illustrated example, RA1 acknowledges (message 4-2) messages 4-1, and configures, in stage 4-3, the access point. When the configuration is ready, RA1 send messages 4-4 to each B1(s), B2(s), P1(s), and A1(s). Messages 4-4 are TETRAPOL short data service messages and they comprise information with which a secure wireless local area network connection can be established with RA1, in the same way as described above with Figures 2 and 3.

In response to reception of message 4-4, each radio apparatus receiving message 4-4 detects, in stage 4-5, that it contains information for WLAN, and takes the received settings in use, i.e. search for a WLAN having the name, and then establishes, using the received information, WLAN connection using WLAN message 4-6. WLAN message 4-6 may be a management frame of an associated request frame type for providing SSID for unsecure connection requiring nevertheless a password, or it illustrates the authentication procedure provided by management frames of an authentication frame type. In the authentication procedure, the WLAN client sends an initial authentication request and receives an authentication frame from the access point, the authentication frame containing a challenge text. The WLAN client encrypts the challenge text by the shared secret, and sends an authentication frame containing the encrypted version of the challenge text to the access point. The access point decrypts the received encrypted version, and if the outcome is the same as the sent challenge text, access is allowed.

Now there is a WLAN connection to be used for downloading data, and TETRA resources can be allocated for the more critical voice traffic. In other words, it is possible to dedicate mission critical air interface (TETRAPOL) for pure mission critical communications by making the use of the other network easier for non-mission critical data communications.

Further, if RA1 is connected to some broadband network, it is usable by the apparatuses connected to RA1 over the WLAN. In other words, the surrounding users have access to the data/databases in the vehicle and they can further use the communication resources, broadband data for example, that are available in a vehicle, but not in the hand portable apparatuses the users are carrying.

Meanwhile the dispatcher or a field commander may have instructed the users over a voice conversation that once their radio apparatuses have established a WLAN connection, they should use it for obtaining data from a file called "information on building N and people working there", for example.

Each time the dispatcher detects a new radio apparatus in the accident area, the dispatcher may trigger sending the WLAN access point information to the radio apparatus, by sending a corresponding instruction to RA1, which then sends message 4-4 to the radio apparatus in question.

The example illustrated with Figure 4 emphasizes an advantage: by means of using a first secure channel to transmit information needed to establish a second secure connection, one avoids the problems relating to providing the information in advance which in some cases is impossible. For example, in the above example there are radio apparatus from four different organizations, and ensuring that they all would have the required information in advance is in praxis impossible. Thanks to employing a secure TETRAPOL channel, the required access information may be transferred to each radio apparatus having a secure TETRAPOL channel to the TETRAPOL network, in an easy way and so that it is easy to use. Further, it allows better co-operation between persons in different organizations (that are in the same area).

Although in the above different embodiments and implementations have been described using two networks, it should be appreciated that there may be more than one wireless local area network or other types of access networks available in the neighborhood, and or the mobile access point may provide a first WLAN for a certain group and a second WLAN with different access information to another group or single user even in parallel.

Although in the above it has been assumed that the access point is a mobile access point, it should be appreciated that the above procedure may be performed with a fixed access point as well.

The steps/stages, messages and related functions described above in Figures 2 to 4 are in no absolute chronological order, and some of the steps/points may be performed simultaneously or in an order differing from the given one. Other functions can also be executed between the steps/points or within the steps/points and other messages sent between the illustrated messages. For example, the user of the intended access point may be prompted to accept that his/her radio apparatus will be an access point. Some of the steps/points or part of the steps/points can also be left out or replaced by a corresponding step/point or part of the step/point. For example, monitoring the update (step 212) and/or reception of a stop instruction (step 213) and/or de-configuring (step 214) may be left out or steps 212 and 213 may be replaced by a validity time of the access point functionality expiring. (The validity time may be given or it may be preconfigured to the radio apparatus.) The messages are only exemplary and may even comprise several separate messages for transmitting the same information. In addition, the messages may also contain other information. Further, other messages may be used to convey the information, like a short message and unstructured supplementary services data.

It will be obvious to a person skilled in the art that, as technology advances, the inventive concept can be implemented in various ways. The invention and its embodiments are not limited to the examples described above but may vary within the scope of the claims.

## Claims

1. A method **characterised by** comprising:
transmitting (4-4), from a first apparatus (200) to a second apparatus (300), over a first secure channel (101) between the first apparatus and the second apparatus in a first access network, access information of a second network, which is required in the second access network to establish between the first apparatus and the second apparatus a parallel second secure connection (103) over the second access network, the access information of the second network being not usable to establish a secure connection in the first access network.

2. A method as claimed in claim 1, further comprising:
receiving (4-1) in the first apparatus an instruction to act as an access point in the second access network; and
configuring (4-3), in response to the instruction, the access point.

3. A method **characterised by** comprising:
receiving (4-4), in a second apparatus (300), from a first apparatus (200) over an active first secure channel (101) in a first access network, which active first secure channel is between the first apparatus and the second apparatus, access information required in a second access network to establish from the second apparatus to the first apparatus a parallel second secure connection (103) over the second access network; and
establishing (4-6), by the second apparatus, in response to the access information, the parallel second secure connection using the received access information.

4. A method as claimed in any of the preceding claim, wherein the access information comprises one or more of the following a shared secret, an encryption key, a service set identifier, and an authentication key.

5. A method as claimed in any of the preceding claims, wherein the second access network is a wireless local area network.

6. A method as claimed in any of the preceding claims, wherein the first access network is a radio access network based on professional mobile radio system.

7. A method as claimed in claim 6, wherein the professional mobile radio system is a terrestrial trunked radio access or TETRAPOL.

8. A computer program product comprising computer program code configured to perform a method as claimed in any one of the claims 1 to 4 when executed on an apparatus.

9. An apparatus (200, 300) configured to support at least two parallel connections (101, 103) over different access networks to another apparatus (300), the parallel connections requiring different access information, the apparatus being **characterised by** comprising means for performing a method as claimed in any one of the claims 1 to 7.

10. An apparatus (200) as claimed in claim 9, configured to support at least two different wireless access technologies, each providing at least one of the at least two parallel connections.

11. A communication system (100) comprising at least
a first access network accessible by a first apparatus and a second apparatus to establish a first secure channel between the first and the second apparatus over the first access network;
the system being **characterised by** further comprising a second access network provided by the first apparatus, wherein
the first apparatus (200) is configured to perform a method as claimed in claim 1 or 2; and
the second apparatus (300) is configured to perform a method as claimed in claim 3.

12. A communication system (100) as claimed in claim 11, wherein the first access network is a radio access network based on professional mobile radio system.

13. A communication system as claimed in claim 12, wherein the professional mobile radio system is terrestrial trunked radio access.

14. A communication system as claimed in claim 11, 12 or 13, wherein the second wireless access network is a wireless local area network, and access information needed to access it comprises one or more of the following a shared secret, an encryption key, a service set identifier, and an authentication key.

15. A communication system (100) as claimed in claim 11, 12, 13 or 14, wherein the first apparatus is a mobile user apparatus or fixed radio apparatus configured to support at least two different wireless access networks and the second apparatus is configured to support at least the same two different wireless access networks.

## Patentansprüche

1. Verfahren, **dadurch gekennzeichnet, dass** es Folgendes umfasst:
Übertragen (4-4) von Zugangsinformationen eines zweiten Netzwerks, die im zweiten Zugangsnetzwerk erforderlich sind, um zwischen einer ersten Vorrichtung und einer zweiten Vorrichtung eine parallele zweite sichere Verbindung (103) über das zweite Zugangsnetzwerk herzustellen, über einen ersten sicheren Kanal (101) zwischen der ersten Vorrichtung und der zweiten Vorrichtung in einem ersten Zugangsnetzwerk von der ersten Vorrichtung (200) zur zweiten Vorrichtung (300), wobei die Zugangsinformationen des zweiten Netzwerks nicht verwendbar sind, um eine sichere Verbindung im ersten Zugangsnetzwerk herzustellen.

2. Verfahren nach Anspruch 1, das ferner Folgendes umfasst:
Empfangen (4-1) einer Anweisung in der ersten Vorrichtung, als ein Zugangspunkt im zweiten Zugangsnetzwerk zu fungieren; und
Auslegen (4-3) des Zugangspunkts in Reaktion auf die Anweisung.

3. Verfahren, **dadurch gekennzeichnet, dass** es Folgendes umfasst:
Empfangen (4-4) von Zugangsinformationen, die in einem zweiten Zugangsnetzwerk erforderlich sind, um über das zweite Zugangsnetzwerk eine parallele zweite sichere Verbindung (103) von einer zweiten Vorrichtung zu einer ersten Vorrichtung herzustellen, in der zweiten Vorrichtung (300) von der ersten Vorrichtung (200) über einen aktiven ersten sicheren Kanal (101) in einem ersten Zugangsnetzwerk, wobei der aktive erste sichere Kanal zwischen der ersten Vorrichtung in der zweiten Vorrichtung verläuft; und
in Reaktion auf die Zugangsinformationen Herstellen (4-6) der parallelen zweiten sicheren Verbindung durch die zweite Vorrichtung unter Verwendung der empfangenen Zugangsinformationen.

4. Verfahren nach einem der vorhergehenden Ansprüche, wobei die Zugangsinformationen eines oder mehreres von Folgendem umfassen: ein gemeinsam verwendetes Geheimnis, ein Verschlüsselungsschlüssel, eine Dienstsatzkennung und ein Authentifizierungsschlüssel.

5. Verfahren nach einem der vorhergehenden Ansprüche, wobei das zweite Zugangsnetzwerk ein drahtloses lokales Netzwerk ist.

6. Verfahren nach einem der vorhergehenden Ansprüche, wobei das erste Zugangsnetzwerk ein Funkzugangsnetzwerk ist, das auf einem professionellen Mobilfunksystem basiert.

7. Verfahren nach Anspruch 6, wobei das professionelle Mobilfunksystem ein terrestrischer Bündelfunkzugang oder TETRAPOL ist.

8. Computerprogrammprodukt, das Computerprogrammcode umfasst, der dazu ausgelegt ist, ein Verfahren nach einem der Ansprüche 1 bis 4 durchzuführen, wenn er auf einer Vorrichtung ausgeführt wird.

9. Vorrichtung (200, 300), die dazu ausgelegt ist, mindestens zwei parallele Verbindungen (101, 103) über verschiedene Zugangsnetzwerke zu einer anderen Vorrichtung (300) zu unterstützen, wobei die parallelen Verbindungen verschiedene Zugangsinformationen erfordern, wobei die Vorrichtung **dadurch gekennzeichnet ist, dass** sie ein Mittel zum Durchführen eines Verfahrens nach einem der Ansprüche 1 bis 7 umfasst.

10. Vorrichtung (200) nach Anspruch 9, die dazu ausgelegt ist, mindestens zwei verschiedene drahtlose Zugangstechnologien zu unterstützen, von denen jede mindestens eine der mindestens zwei parallelen Verbindungen bereitstellt.

11. Kommunikationssystem (100), das mindestens Folgendes umfasst
ein erstes Zugangsnetzwerk, das für eine erste Vorrichtung und eine zweite Vorrichtung zugänglich ist, um zwischen der ersten und der zweiten Vorrichtung über das erste Zugangsnetzwerk einen ersten sicheren Kanal herzustellen;
wobei das System **dadurch gekennzeichnet ist, dass** es ferner ein zweites Zugangsnetzwerk umfasst, das von der ersten Vorrichtung bereitgestellt wird, wobei
die erste Vorrichtung (200) dazu ausgelegt ist, ein Verfahren nach Anspruch 1 oder 2 durchzuführen; und
die zweite Vorrichtung (300) dazu ausgelegt ist, ein Verfahren nach Anspruch 3 durchzuführen.

12. Kommunikationssystem (100) nach Anspruch 11, wobei das erste Zugangsnetzwerk ein Funkzugangsnetzwerk ist, das auf einem professionellen Mobilfunksystem basiert.

13. Kommunikationssystem nach Anspruch 12, wobei das professionelle Mobilfunksystem ein terrestrischer Bündelfunkzugang ist.

14. Kommunikationssystem nach Anspruch 11, 12 oder 13, wobei das zweite drahtlose Zugangsnetzwerk ein drahtloses lokales Netzwerk ist und Zugangsinformationen, die für den Zugang dazu benötigt werden, eines oder mehreres von Folgendem umfassen: ein gemeinsam verwendetes Geheimnis, ein Verschlüsselungsschlüssel, eine Dienstsatzkennung und ein Authentifizierungsschlüssel.

15. Kommunikationssystem (100) nach Anspruch 11, 12, 13 oder 14, wobei die erste Vorrichtung eine mobile Benutzervorrichtung oder eine feste Funkvorrichtung ist, die dazu ausgelegt ist, mindestens zwei verschiedene drahtlose Zugangsnetzwerke zu unterstützen, und die zweite Vorrichtung dazu ausgelegt ist, mindestens dieselben zwei verschiedenen drahtlosen Zugangsnetzwerke zu unterstützen.

## Revendications

1. Procédé **caractérisé en ce qu'**il comprend :
la transmission (4-4), d'un premier appareil (200) à un second appareil (300), sur un premier canal sécurisé (101) entre le premier appareil et le second appareil dans un premier réseau d'accès, d'informations d'accès d'un second réseau, qui sont requises dans le second réseau d'accès pour établir entre le premier appareil et le second appareil une seconde connexion sécurisée parallèle (103) sur le second réseau d'accès, les informations d'accès du second réseau n'étant pas utilisables pour établir une connexion sécurisée dans le premier réseau d'accès.

2. Procédé selon la revendication 1, comprenant en outre :
la réception (4-1) dans le premier appareil d'une instruction pour jouer le rôle de point d'accès dans le second réseau d'accès ; et
la configuration (4-3), en réponse à l'instruction, du point d'accès.

3. Procédé **caractérisé en ce qu'**il comprend :
la réception (4-4), dans un second appareil (300), en provenance d'un premier appareil (200) sur un premier canal sécurisé actif (101) dans un premier réseau d'accès, lequel premier canal sécurisé actif se trouve entre le premier appareil et le second appareil, d'informations d'accès requises dans un second réseau d'accès pour établir du second appareil au premier appareil une seconde connexion sécurisée parallèle (103) sur le second réseau d'accès ; et
l'établissement (4-6), par le second appareil, en réponse aux informations d'accès, de la seconde connexion sécurisée parallèle en utilisant les informations d'accès reçues.

4. Procédé selon l'une quelconque des revendications précédentes, dans lequel les informations d'accès comprennent un ou plusieurs de ce qui suit : un secret partagé, une clé de chiffrement, un identificateur d'ensemble de services, et une clé d'authentification.

5. Procédé selon l'une quelconque des revendications précédentes, dans lequel le second réseau d'accès est un réseau local sans fil.

6. Procédé selon l'une quelconque des revendications précédentes, dans lequel le premier réseau d'accès est un réseau d'accès radio basé sur un système radio mobile professionnel.

7. Procédé selon la revendication 6, dans lequel le système radio mobile professionnel est un accès radio à ressources partagées terrestre ou TETRAPOL.

8. Produit de programme informatique comprenant un code de programme informatique configuré pour effectuer un procédé selon l'une quelconque des revendications 1 à 4 lorsqu'il est exécuté sur un appareil.

9. Appareil (200, 300) configuré pour supporter au moins deux connexions parallèles (101, 103) sur des réseaux d'accès différents à un autre appareil (300), les connexions parallèles requérant des informations d'accès différentes, l'appareil étant **caractérisé en ce qu'**il comprend des moyens pour effectuer un procédé selon l'une quelconque des revendications 1 à 7.

10. Appareil (200) selon la revendication 9, configuré pour supporter au moins deux technologies d'accès sans fil différentes, fournissant chacune au moins l'une des au moins deux connexions parallèles.

11. Système de communication (100) comprenant au moins
un premier réseau d'accès accessible par un premier appareil et un second appareil pour établir un premier canal sécurisé entre le premier et le second appareil sur le premier réseau d'accès ;
le système étant **caractérisé en ce qu'**il comprend en outre un second réseau d'accès fourni par le premier appareil, dans lequel
le premier appareil (200) est configuré pour effectuer un procédé selon la revendication 1 ou 2 ; et
le second appareil (300) est configuré pour effectuer un procédé selon la revendication 3.

12. Système de communication (100) selon la revendication 11, dans lequel le premier réseau d'accès est un réseau d'accès radio basé sur un système radio mobile professionnel.

13. Système de communication selon la revendication 12, dans lequel le système radio mobile professionnel est un accès radio à ressources partagées terrestre.

14. Système de communication selon la revendication 11, 12 ou 13, dans lequel le second réseau d'accès sans fil est un réseau local sans fil, et des informations d'accès nécessaires pour y accéder comprennent un ou plusieurs de ce qui suit : un secret partagé, une clé de chiffrement, un identificateur d'ensemble de services, et une clé d'authentification.

15. Système de communication (100) selon la revendication 11, 12, 13 ou 14, dans lequel le premier appareil est un appareil d'utilisateur mobile ou un appareil radio fixe configuré pour supporter au moins deux réseaux d'accès sans fil différents et le second appareil est configuré pour supporter au moins les mêmes deux réseaux d'accès sans fil différents.
